# EUROPEAN PATENT APPLICATION

(11) **EP 3 059 131 A1**
(43) Date of publication of application: **24.08.2016**
(21) Application number: 15000496.8
(22) Date of filing: 20.02.2015
(51) Int. Cl.: B60T 17/08, B60T 7/10, B60T 13/26, B60T 13/38

(54) **Spring brake actuator, valve assembly, hand brake lever, braking system, and method of controlling the same**

(71) Applicant: WABCO Europe BVBA, 1160 Brussels (BE)
(72) Inventor: Biernatowski, Lukasz, 53-617 Wroclaw (PL); Lesko, Piotr, 46-203 Kluczbork (PL)
(74) Representative: Copi, Joachim

(57) **Abstract**

The invention relates to a spring brake actuator (1), in particular parking or emergency spring brake actuator (1), for use in a commercial vehicle, said actuator comprising: a housing (3), a push rod (17) for actuating a brake mechanism, a spring brake piston (5) for actuating the push rod (17), and a displacement member (7), preferably a diaphragm or piston, for actuating the push rod (17).

In particular, the housing (3), the spring brake piston (5) and the displacement member (7) define one common pressure chamber (9).

In further aspects, the invention relates to a control valve assembly, a hand brake lever, a braking system, and a method for controlling a spring brake actuator.

## Description

The present invention relates to a spring brake actuator, in particular parking or emergency spring brake actuator, for use in a commercial vehicle, said actuator comprising a housing, a push rod for actuating a brake mechanism, a spring brake piston for actuating the push rod, and a displacement member, preferably a diaphragm or piston, for actuating the push rod.

The invention further relates to a control valve assembly for controlling a spring brake actuator.

The invention further relates to a hand brake lever for controlling air pressure in a spring brake actuator, wherein the hand brake lever is adapted to be connected to a parking brake line of a braking system for controlling the pressure in said parking brake line.

The invention further relates to a braking system for a commercial vehicle, comprising a spring brake actuator a parking brake line and a service brake line connected to the spring brake actuator, a foot brake in fluid communication with the service brake line for controlling the pressure in said service brake line, and a hand brake lever in fluid communication with the parking brake line for controlling the pressure in said parking brake line.

The invention still further relates to a method for controlling a spring brake actuator or a control valve assembly.

Spring brake actuators of the aforementioned type are commonly used in commercial vehicles to apply the necessary braking force to the vehicle's brake mechanisms. In order to do so, a push rod is actuated by the displacement member in driving situations, and by the spring brake piston in non-driving situations such as a parking situation or in cases of emergency braking. The background for such dual systems is that vehicles having a pneumatic braking system require a reliable supply of pressurized air. In order to minimize the risk of air loss, the brake lines are depressurized whenever possible. Most typically, this happens when the car is parked and not operating. For these situations, the mechanical braking force applied by the spring brake piston, which is normally actuated by a compression spring pushes the spring brake piston away from a spring seat and towards the push rod.

As is evident from the aforementioned functioning principle, the push rod needs to be moved by a certain stroke length. In addition, the spring brake piston also needs to overcome a certain stroke length in addition to the stroke length then required by the push rod in order to reach the position where it engages the push rod from its starting position. It has been determined that the stroke lengths of those two separately operated brake actuators are the two main contributors to the overall build size (in the direction of the stroke length of the push rod) of the spring brake actuator. Size and weight of the spring brake actuator are a key limiting factor when considering possible uses of the spring brake actuators in the commercial vehicle and also their orientation. In typical vehicle setups, spring brake actuators are oriented to push the push rod in a radial direction with respect to the wheel and brake mechanism for space reasons, whereas it would be more beneficial to orient the spring brake actuators such that the push rod is moved in an axial direction towards the wheel brake mechanism.

It has therefore been an object of the invention to provide a spring brake actuator which allows for more compact build, and in particular enhanced variability of installation, if possible without sacrificing brake performance.

It has further been an object of the invention to provide a control valve assembly for controlling such a spring brake actuator.

Still further, it has been an object of the invention to provide a hand brake lever for controlling the air pressure in such a spring brake actuator, preferably through the control valve assembly.

Still further, it has been an object of the invention to suggest a braking system encompassing one, several or all of the above-mentioned units.

It has also been an object of the invention to suggest a method for controlling the aforementioned spring brake actuator, or the aforementioned control valve assembly.

In a first aspect of the invention, the object is solved with regard to the spring brake actuator by the features of claim 1. In particular, the spring brake actuator of the invention provides that the housing, the spring brake piston and the displacement member define one common pressure chamber.

The invention makes use of the realization that the unification of the hitherto separate actuating mechanisms for the spring brake piston on the one side and the displacement member on the other side leads to a significant minimization of overall build size in the direction of the stroke length of the push rod. A key factor is that in normal driving situations, when the spring brake piston is in a retained position (hereinafter also: "retention position"), the pressure chamber is only responsible for displacing the displacement member directly, such that air volume or build space for an extra control chamber for the spring brake piston is not necessary.

In parking brake situations or emergency brake situations, the same common pressure chamber can now be used to provide added functionality to the spring brake actuator when compared to conventional designs, as it is now possible to a) provide a pneumatic hand brake action through the common pressure chamber actuating directly on the displacement member, and b) to supply the mechanical braking force through the spring brake piston, preferably acting upon the displacement member and push rod. The new control concept with one actuating chamber allows for space- and weight using design and contributes to minimize air loss.

Further advantages and preferred embodiments will be elucidated herein after and in the depending claims.

The spring brake actuator preferably comprises a mechanical locking mechanism for engaging and releasing the spring brake piston such that a movement of the spring brake piston towards the push rod is prevented. It has been found that a mechanical locking mechanism is at the same time highly efficient in terms of applicable retention force and space-saving design. Furthermore, a mechanical locking mechanism provides various options of control. While an exemplary and particularly preferred control option will be to use the pneumatic system of the braking system of the commercial vehicle, other control options such as electromagnetic or hydraulic controls would also be feasible.

In a further preferred embodiment, the mechanical locking mechanism comprises at least one plunger for engaging the spring brake piston, preferably by way of a frictional connection, a positive locking, or a combination thereof. The mechanical locking mechanism could for example comprise at least one, preferably a plurality of: radially projecting members extending into corresponding protrusions of the spring brake piston, or vice versa; radially displaceable, preferably not self-locking screws frictionally or positively engaging the spring brake piston (or vice versa); axially oriented fixing mechanisms, or combinations thereof. The projecting members might for example be steel pins, steel rollers or the like.

Preferentially, the mechanical locking mechanism comprises a spring brake control chamber, and a pneumatic actuator adapted to engage the plunger as a function of the pressure inside the spring brake control chamber. The spring brake control chamber preferably is defined by the housing, the spring brake piston and the pneumatic actuator. Particularly, the pneumatic actuator is displaceable like a plunger by varying pressure inside the spring brake control chamber. This way, the controlling entity for the mechanical locking mechanism would be pressure inside the spring brake control chamber. If the pressure is maintained at a sufficiently high level, the pneumatic actuator will engage the plunger in an extent which allows for retention of the spring brake piston. The pneumatic actuator may for example be a plunger or a ring-type actuator moving in a correspondingly shaped recess.

According to a further preferred embodiment, said pneumatic actuator is adapted to retain the at least one plunger in its locking engagement when the actuating pressure is at or above a retention pressure, and release the at least one plunger from its locking engagement when the actuating pressure is below the retention pressure. Under the term "retention pressure", a predetermined pressure value is understood which depends mainly on the strength of the compression spring, or in more general terms the force which causes the release of the spring brake piston towards the push rod.

In a particularly preferred embodiment, the spring brake actuator comprises a control valve assembly having a first fluid port for connection to a parking brake line, a second fluid port for connection to a service brake line, a third fluid port in fluid communication with the spring brake control chamber, and a fourth fluid port in fluid communication the common pressure chamber.

As has been described herein above, the spring brake actuator can be operated through controlling two different pressure values, the first of which being the pressure in the common pressure chamber, and the second of which being the pressure in the spring brake control chamber. While this in principle can be put into practice in various different ways, it has been found beneficial to use a dedicated control valve assembly.

Preferably, the control valve assembly is adapted to connect brake-side to the pressure control chamber as well as to the common pressure chamber, while on the braking system side it is adapted to connect to two dedicated pressure lines which are already existent in many commercial vehicles. One pressure line is the service brake line which transmits air pressure from the driver's foot brake pedal to the brake mechanism, while the other is the so-called parking brake line which transmits air pressure from a hand brake lever to the brake mechanism, and which in known vehicles is also used to release the spring brake piston. The control valve assembly thus allows retrofitting already existing commercial vehicles with the novel spring brake actuator without having to modify the pneumatic system of the vehicle at all.

The control valve assembly may be an integrated part of the spring brake actuator, or may be provided as separate unit which is coupled in between the spring brake actuator and the braking system. Therefore, in a second aspect, the control valve assembly is also separately claimed.

The following description of preferred embodiments and advantages therefore is understood as both relating to preferred embodiments of the spring brake actuator and to preferred embodiments of the control valve assembly separately.

In a preferred embodiment the control valve assembly is configured such that the first fluid port and the third fluid port are always at equal pressure. By making this connection, the control valve assembly assures that when connecting the third fluid port to the spring brake control chamber and the first fluid port to the parking brake line, the driver always has immediate control over the pressure maintained in the spring brake control chamber.

It is further preferred if said control valve assembly is adapted to selectively:
- connect either the second fluid port, or the first fluid port to the fourth fluid port, whichever pressure is higher, and
- connect the first fluid port to the third fluid port. The control valve assembly in this embodiment ensures the function of enabling the driver to prioritize braking force submitted by the hand brake lever (parking brake line) over the foot brake pedal (service brake line), and vice versa. It is hereby ensured that whichever system receives the more urgent braking input from the driver, meaning higher desired braking effect, shall be prioritized by the control valve assembly and the latter is adapted to submit air pressure accordingly to the common pressure chamber, when the fourth fluid port is connected to the common pressure chamber, the first fluid port connected to the parking brake line and the second fluid port connected to the service brake line.

The control valve assembly in a further preferred embodiment is adapted to control the pressure at the fourth fluid port inversely dependant on, preferably inversely proportional to, the pressure at first fluid port..The inversely proportional valve has the function of decreasing the pressure at the fourth fluid port in inverse fashion with respect to the pressure increase at the first fluid port. The control valve assembly preferably comprises a first operating mode, in which mode the valve assembly is switched so that:
the fourth fluid port and either the first fluid port or the second fluid port are in fluid communication with each other, whichever is higher. During startup of the commercial vehicle's braking system, which shall be assumed to be in the parking stage with the spring brake piston in the activated position, the common pressure chamber needs to be pressurized sufficiently to displace the spring brake piston back towards its retention position. This can be achieved either through pressure supplied by the first fluid port (parking brake line) or the second fluid port (service brake line). Enabling the prioritized association of one of those two with the fourth fluid port allows the user to support the spring brake release by pushing the foot brake pedal

It is further preferred that the control valve assembly comprises a second operating mode, in which mode the valve assembly is switched so that:
- either the first fluid port or the second fluid port, whichever pressure is higher, are in fluid communication with the fourth fluid port, wherein air pressure at the fourth fluid port is inversely dependant, preferably inversely proportional, to the air pressure at the first fluid port. The second operating mode succeeds the first operating mode during startup of the braking system. After the common pressure chamber has been pressurized sufficiently for the spring brake piston to be moved back into its retention position, the air pressure has at the end of the first operating mode preferably been increased sufficiently such that the mechanical locking mechanism holds the spring brake piston in the retention position. The push rod however will still be in the extended position, applying now the braking force caused by the expansion of the common pressure chamber to the brake mechanism. In order to transfer the vehicle from the braking state to a driving mode in which the brake mechanism is released, pressure in the common pressure chamber needs to be lowered without at the same time also lowering the pressure in the spring brake control chamber. The control valve assembly of this embodiment achieves that by reducing the pressure at the fourth fluid port simultaneously to increasing the pressure at the first fluid port, which preferably is in fluid communication with the second fluid port at all times.

The control valve assembly comprises in a further preferred embodiment a third operating mode, in which mode the valve assembly is switched so that:
- the second fluid port and the fourth fluid port are in fluid communication and at equal pressure. After the brake mechanism has been released in the second operating mode, which means that the pressure in the common pressure chamber has been decreased sufficiently far, preferably released to zero pressure, normal driving and brake operation is ensured in the third operating mode. Air pressure supplied to the second fluid port is immediately communicated through to the fourth fluid port. Preferably, brake prioritization is also enabled in this mode (see above).

Preferentially, the control valve assembly is adapted to remain in the third operating mode as long as the pressure at the third fluid port is at or above a predetermined setpoint, said setpoint being lower than the standard operating pressure, but higher than the retention pressure. The third operating mode works to its highest efficiency when the common pressure chamber is a zero pressure in the absence of pressure input at the fourth fluid port.

It is therefore preferred if the control valve assembly only starts to move from the third operating mode into the second operating mode when the pressure at the first and third fluid port, which normally is held at the standard operating pressure, has decreased below the predetermined setpoint. This provides a certain tolerance for standard operating pressure variations during normal operation in the braking system when the control valve assembly is installed.

Preferably, the control valve assembly comprises pressure detection means to register the pressure decrease, or is equipped with a data or signal interface for registering an externally provided switching signal, for example generated by an external pressure sensor monitoring the pressure in the parking brake line, said signal being representative of the pressure in the parking brake line, and thus also at the first fluid port, third fluid port and in the spring brake control chamber, reaching or falling below the setpoint.

According to a further embodiment the control valve assembly comprises at least one throttle in fluid communication with the first fluid port, and
- a fourth operating mode, in which mode the valve assembly is switched so that:
- the fourth fluid port is in fluid connection with the throttle. When the pressure at the first fluid port, and thus in the spring brake control chamber, has decreased sufficiently for the spring brake piston to be released, very high mechanical forces stored in the compression spring of the spring brake actuator are released and push the spring brake piston violently towards the push rod. In that situation, there will still be air inside the common pressure chamber. The throttle of the control valve assembly softens the movement of the spring brake piston by comparatively gently releasing pressurized air out of the common pressure chamber through the throttle. Alternatively or additionally, a partial air flow out of the common pressure chamber through the inversely proportional section of the control valve assembly may be contemplated.

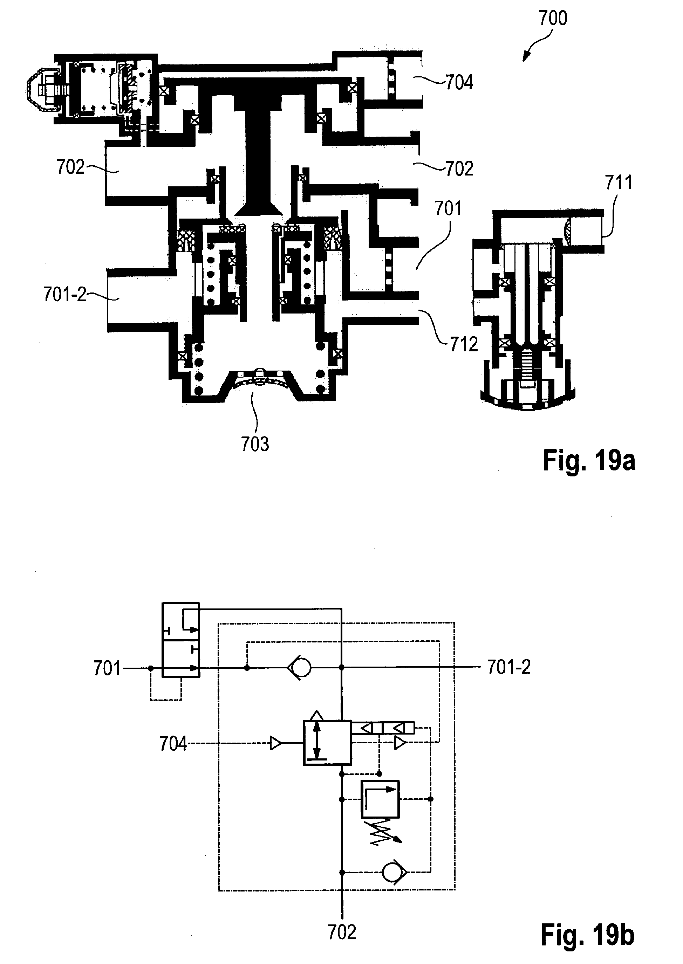

Preferably, the control valve assembly comprises an inversely proportional valve connected with the first fluid port. The inversely proportional valve preferably works in accordance with known functioning principles such as also employed by commercially available trailer brake valves or relay emergency valves. One exemplary valve is commercially available with Wabco Part. No. 971 002 300 0. The function of the exemplary valve type will be explained in more detail with reference to figures 19a and b.

The control valve assembly according to a further preferred embodiment comprises a check valve with throttled backflow, said check valve with throttled backflow being in fluid communication with the first fluid port. The check valve is preferably oriented such that air flow from the first fluid port through the control valve assembly towards the fourth fluid port is met with minimal flow resistance by opening the check valve, whereas reverse flow from the fourth fluid port through the control valve assembly to the first fluid port is dampened by the throttle.

The control valve assembly preferentially comprises a control valve, said control valve being switchable to be in fluid communication either with the inversely proportional valve or the check valve with throttled backflow, said control valve preferably being actuated by a plunger which is actuated by the spring brake piston, said plunger being configured to be displaced and switch the control valve when the spring brake piston moves away from its retained position towards the push rod. The control valve has the central function of identifying whether the spring brake piston is in the retention position or not. The control valve thus is adapted to switch the control valve assembly from the second operating mode to the third operating mode and vice versa. While the above-mentioned mechanical actuation of the control valve is preferred, other switching mechanisms such as hydraulic, electromagnetic or pneumatic are further feasible examples of actuation.

In another preferred embodiment, the control valve assembly comprises a shuttle valve which is adapted to establish a fluid communication between either the second fluid port or the control valve, whichever pressure is higher, and the fourth fluid port. The shuttle valve realizes the above-described function of prioritizing the more urgent user input to go through to the fourth fluid port.

The control valve assembly, as has been described above, provides two different ways of applying brake force without actuating the foot brake pedal (service brake line). The pressure decrease at the first fluid port leads, in combination with the inversely dependent fluid connection between the first fluid port and the fourth fluid port, to a two-stage pressure behavior. In a first depressurization stage of the first fluid port, pressure is actually increased in the common pressure chamber without the service brake line having anything to do with it. This section can be exploited as a pneumatic hand brake operation. In order to control such operation, the invention in a third aspect also concerns a hand brake lever.

The object of the invention is according to a further aspect also solved by a hand brake lever for controlling air pressure in a spring brake actuator, in particular the spring brake actuator of any one of the preferred embodiments described herein,
wherein the hand brake lever is adapted to be connected to the parking brake line for controlling the pressure in said parking brake line,
characterized in that the hand brake lever is movable between a first, a second and a third position, the hand brake lever being configured to allocate to the parking brake line:
- zero pressure in the third position,
- the retention pressure in the second position, and
- the standard operating pressure, which is above the retention pressure, in the first position. In this constellation, the hand brake lever can be used for applying the pneumatic hand braking force while moving the hand brake lever from the first position into the second position, and then the mechanical braking force when moving the lever further past the second position to the third position. The ability to apply a pneumatic hand braking function is particularly useful for commercial vehicles which often are parked for short periods of time only which do not merit the full stoppage of all vehicle systems, including depressurizing the brake lines. Typical commercial vehicles which benefit from this solution would be buses or city trucks.

The hand brake lever is in a first preferred alternative adapted to be movable gradually in a first range extending between the first and second position, and gradually in a second range extending between the second and third position, respectively for gradually allocating pressure to the parking brake line. Under "gradually" it is understood that each lever position of the hand brake lever allocates a distinct pressure to the parking brake line. The hand brake lever may in a first alternative be adapted to move in steps or allocate stepped pressures to the parking brake line. In a second alternative, the hand brake lever is adapted to continuously be moved from one position to the other, allocating steplessly distinct pressures for each lever position.

One particularly beneficial aspect is that the driver, when operating the hand brake lever, shall be given added security such that unwanted release of the spring brake piston can be prevented and air consumption can be lowered. By installing the manual switch, attention of the driver to reading the end of the aforementioned first range, namely pneumatic parking brake range would be ensured.

Preferably, the hand brake lever comprises a manual switch for selectively enabling or preventing the lever to be moved from the first range to the second range and preferably vice versa.

Alternatively or additionally, it is preferred if the hand brake lever is coupled to a drag mechanism, the drag mechanism being adapted to generate a force opposite to the direction of movement of the hand brake lever, said drag mechanism being adapted to apply a first drag in the first range, and a second drag different from the first drag in the second range. The main idea behind the drag mechanism is to provide a false feedback system causing different haptical responses of the hand brake lever for the driver, depending on which range the lever is being operated in.

The drag mechanism preferably comprises at least one of:
- a mechanical element, preferably a spring or rubber element,
- a geometrical element, preferably a pawl, groove, curve, step,
- a pair of frictionally engaging objects,
- an object acting against a viscose fluid,
- a magnetic or electromagnetic field,
- a pneumatic or hydraulic damper, or
- combinations thereof.

Another preferred embodiment of the hand brake lever comprises an alarm device for generating an alarm signal when the hand brake lever is moved to or past the second position, in particular when leaving the second range towards the first range, said alarm device comprising at least one of: a light emitter, a vibration alarm and a sound generator. It has been shown that the level of attention obtained is increased significantly if more than one sense of the driver is being stimulated. Thus, it is considered particularly beneficial to stimulate both visually and acoustically in addition to the haptical feedback described herein above.

The hand brake lever preferably comprises an automatic switch adapted to release movement of the hand brake lever from one range to the other range only below a predetermined vehicle speed, and to block movement of the hand brake lever from one range to the other range at or above the predetermined speed. Inadvertent application of the hand brake lever beyond the second position towards the third position leads to an emergency braking which may cause dramatic problems in traffic. The term "emergency braking" is to be understood as braking in a situation when the service brake is not operable, for example, in cases where the service line is disconnected (damaged) or the pressure supply for the service brake is too low to provide sufficient braking force. According to the preferred embodiment the first braking range of the hand brake lever is available for movement by the operator, as preferably, the parking line will have a separate pressure supply and piping. Application of brake force (increase or decrease) is preferably provided gradually.

Applying the second range by moving the hand brake lever into the second range, immediately applies the full braking force in emergency cases. It shall be kept in mind that when providing full braking force, maneuverability such as wheel traction is not necessarily guaranteed.

Accordingly, in one preferred embodiment, it is only possible for safety reasons to initiate the mechanical hand braking of the spring brake piston below a predetermined speed or even only at standstill of the vehicle. The automatic switch is preferably adapted to communicate with the vehicle's electronic control unit or directly with speed sensors of the vehicle.

In a further aspect the object of the invention is solved by a braking system for a commercial vehicle, comprising:
- a spring brake actuator,
- a parking brake line and a service brake line connected to the spring brake actuator,
- a foot brake in fluid communication with the service brake line for controlling the pressure in said service brake line, and
- a hand brake lever in fluid communication with the parking brake line for controlling the pressure in said parking brake line, wherein the spring brake actuator and/or the hand brake lever are made in accordance with any one of the preferred embodiments described herein.

With regard to the advantages and preferred embodiments of the braking system encompassing the spring brake actuator, and/or the hand brake lever of the invention, reference is made to the corresponding passages and descriptions made herein above. The braking system preferably has the same preferred embodiments as the spring brake actuator and/or the hand brake lever according to the invention.

The invention provides in a further aspect a braking system having two hand brake levers, namely a first hand brake lever, and a second hand brake lever,
wherein said first hand brake lever is gradually movable between a first position and a second position and adapted to gradually allocate a pressure from a first pressure range to the parking brake line, said first pressure range preferably extending from the standard operating pressure to the retention pressure; and
wherein the second hand brake lever is gradually movable between a first position and a second position and adapted to gradually allocate a pressure from a second pressure range to the parking brake line, the second pressure range preferably extending from the retention pressure to zero pressure. One preferred alternative to operating a two-stage hand brake lever, undesired maloperation could also be prevented by providing a first hand brake lever and a second hand brake lever, each of which being responsible for one of the two pressure ranges. Those pressure ranges are preferably the ones described herein above with regard to the operation of the spring brake actuator and the single-lever solution of the hand brake lever.

The first and second hand brake lever are preferably coupled such that
- movement of the first lever is only enabled if the second hand brake lever is in its first position, and
- movement of the second hand brake lever is only enabled if the first hand brake lever is in its second position.

In a further aspect, the object of the invention is solved by a method for controlling a spring brake actuator, in particular a spring brake actuator of any one of the preferred embodiments described herein or a control valve of any one of the preferred embodiments described herein, the method comprising the steps of:
- providing pressurized air to one common pressure chamber which is defined by a housing, a spring brake piston, and a displacement member of the spring brake actuator, and
- selectively moving the spring brake piston, the displacement member or both to transmit a braking force to a push rod with the pressurized air in the common pressure chamber. With respect to the advantages and benefits of the inventive method, it is referred to the passages herein above describing the spring brake actuator, control valve assembly, hand brake lever and braking system. The method preferably has the same preferred embodiments as those aspects of the invention.

The method of preferably comprises the step of:
- selectively engaging or releasing the spring brake piston with a mechanical locking mechanism.

Preferentially, the method further comprises the step of:
- providing pressurized air to a pneumatic actuator of the mechanical locking mechanism, and thereby
- retaining the spring brake piston when the actuating pressure is at or above its retention pressure, or
- releasing the spring brake piston when the actuating pressure is below the retention pressure.

The pressurized air acting on the pneumatic actuator preferably is always held at the same pressure as in a parking brake line of the connected braking system, in particular a braking system according to one of the preferred embodiments described hereinabove, and wherein the pressurized air in the common pressure chamber is a function of the pressure in the parking brake line, in a service brake line of the braking system, and of the retained or released state of the spring brake piston, and preferably regulated by a control valve assembly of any one of the preferred embodiments described hereinabove.

The method of preferably comprises a first operating mode, in which mode:
- air pressure in the common pressure chamber is increased from zero pressure to the retention pressure,
- air pressure acting on the pneumatic actuator, preferably in a spring brake control pressure chamber, is increased from zero pressure to the retention pressure, and
- the spring brake piston is retained by the mechanical locking mechanism once the retention pressure is reached. The first operating mode of the method serves to initiate the startup of the braking system and release of the mechanical braking force applied by the spring brake piston in the parking position. By pressurizing the common pressure chamber, the spring brake piston is being pushed back towards its retention position. Since the air pressure acting on the pneumatic actuator is simultaneously increased, the spring brake piston can then be held in its retention position once being moved there by the common pressure chamber volume increase. At the same time, the brake force acting on the brake mechanism is maintained, since the displacement member is held in place by the volume increase in the common pressure chamber.

The method preferably further comprises a second operating mode, in which mode:
- air pressure acting on the pneumatic actuator is increased from the retention pressure to a standard operating pressure, and
- air pressure in the common pressure chamber is decreased from the retention pressure to zero pressure, preferably inversely proportional to the pressure increase acting on the pneumatic actuator. In the second operating mode, the spring brake actuator is continued to be held in the retained position since the pressure acting on the pneumatic actuator is increased further. The simultaneously occurring pressure decreased in the common pressure chamber, however, leads to the displacement member being retracted, leading in turn to a retraction of the push rod of the spring brake actuator and consequently to a release of the brake mechanism. Driving mode is enabled once the push rod has sufficiently been retracted, preferably when the common pressure chamber has reached zero pressure. Whenever in this document, "zero pressure" is mentioned, a difference of zero with respect to the ambient pressure is understood.

Further, it is preferred if the method encompasses a third operating mode, in which mode:
- air pressure in the common pressure chamber is equal to the, preferably variable, pressure in the service brake line, and
- air pressure acting on the pneumatic actuator is equal to the pressure in the parking brake line, and preferably held at the standard operating pressure. The third operating mode is the normal driving mode in which the pressure acting upon the pneumatic actuator is normally the standard operating pressure, and the pressure acting on the common pressure chamber is the air pressure being supplied either by the service brake line through the foot brake pedal, or in particular constellations, an automatically applied brake pressure by the braking system, such as ABS, et cetera.

The method in a further preferred embodiment comprises the steps of:
- decreasing the air pressure acting on the pneumatic actuator, preferably by using a hand brake lever, preferably the hand brake lever of any one of the preferred embodiments described herein, and
- when the air pressure acting on the pneumatic actuator has decreased to or below a predetermined value below the standard operating pressure, but still above the retention pressure: inversely proceeding in the second operating mode, such that
- air pressure acting on the pneumatic actuator is decreased towards the retention pressure, and
- air pressure in the common pressure chamber is increased towards the retention pressure, preferably inversely proportional to the pressure decrease acting on the pneumatic actuator. The second operating mode of the spring brake actuator, i.e. of the control valve assembly, leads to a gradual pressure increase in the common pressure chamber while the parking brake line is depressurized. The consequence thereof is that as the air pressure acting on the pneumatic actuator reaches the retention pressure, there is already sufficient pressure in the common pressure chamber to hold the spring brake piston temporarily in position even after the spring brake piston has been released by the mechanical locking mechanism. This inverse second operating mode is understood to be the pneumatic parking brake function range.

In another preferred embodiment the method comprises the steps of:
- when the pressure acting on the pneumatic actuator has been decreased to reach the retention pressure, and the pressure in the common chamber has been increased to or above the retention pressure:
   inversely proceeding in the first operating mode, in which mode:
- the spring brake piston is released,
- air pressure in the common pressure chamber is decreased towards zero pressure for moving the released spring brake piston, and
- air pressure acting on the pneumatic actuator, preferably in a spring brake control pressure chamber, is decreased towards zero pressure. In the inverse first operating mode, the spring brake piston is moved from its retention position into the extended position in order to apply the mechanical parking brake function. Movement of the piston is softened by a throttle, preferably a throttle function of the control valve assembly.

For a more complete understanding of the invention, the invention will now be described in more detail with reference to the accompanying drawings. The detailed description will illustrate the described or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and is claimed herein after.

Further, the features described in the description, the drawings and the claims disclosing the invention may be essential for the invention considered alone or in combination.

In particular, any reference signs in the claims shall not be construed as limiting the scope of the invention. The word "comprising" does not exclude other elements or steps. The wording "a" or "an" does not exclude a plurality.

In brief, the figures which reference will be made to show:
- Fig. 1: shows a schematic cross-sectional view of a spring brake actuator according to a preferred embodiment,
- Fig. 2: an enlarged detail view of Fig. 1,
- Fig. 3: a schematic diagram of a braking system according to a preferred embodiment,
- Figs. 4a - 16a: schematic drawings of the spring brake actuator and a control valve assembly in different operating stages,
- Figs. 4b - 16b: schematic graphical representations of the pressure behavior of the spring brake actuator of Figs. 4a - 16a,
- Figs. 4c - 16c: schematic cross-sectional views of the spring brake actuator in the state shown in Figs. 4a - 16a and 4b - 16b,
- Figs. 11d - 15d: schematic representations of a hand brake lever according to a preferred embodiment in the states as indicated by Figs. 11a - 15a, 11b - 15b, 11c - 15c,
- Fig. 17: a schematic side view of the hand brake lever according to a preferred embodiment,
- Fig. 18: a pressure diagram for the hand brake lever in operation in the braking system according to the preferred embodiment, and
- Fig. 19a,b: schematic drawings of an exemplary, commercially known inversely proportional valve.

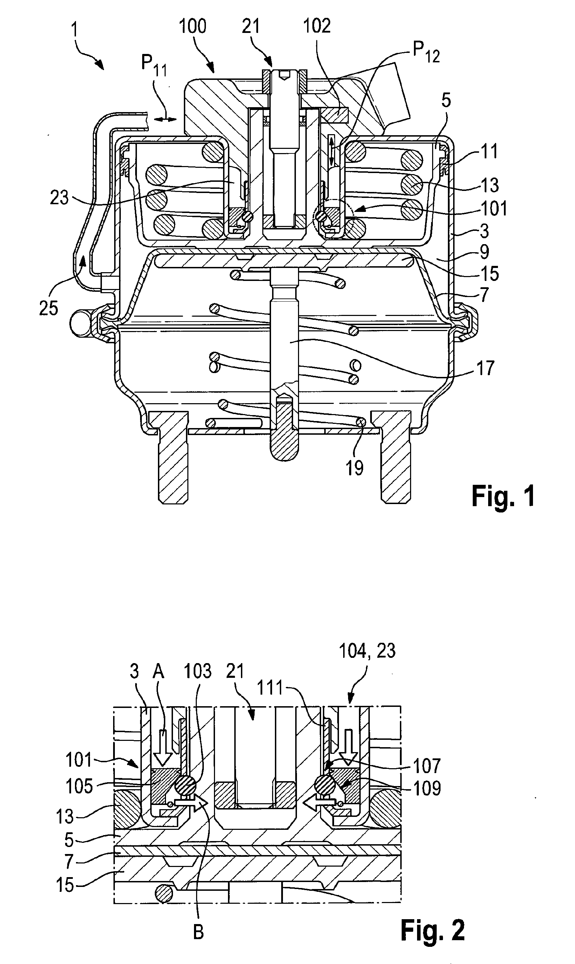

Fig. 1 shows a spring brake actuator 1. The spring brake actuator 1 comprises a housing 3. Inside the housing, a spring brake piston 5 is located. Opposite of the spring brake piston 5, the spring brake actuator 1 comprises a displacement member 7, which in the present example is a diaphragm. The housing 3, the spring brake piston 5 and the displacement member 7 together define a common pressure chamber 9. The spring brake piston is sealed against the housing through sealing means 11. A compression spring 13 is sitting on a spring seat inside the housing 3 and is adapted to force the spring brake piston 5 away from the spring seat towards a head plate 15 of a push rod 17. The push rod 17 is in Fig. 1 shown in the retracted position, as well as the spring brake piston 5. The push rod 17 is adapted to transmit the stroke movement into a braking force applied by a brake mechanism (not shown). A return spring 19 is located inside the housing and effective to move the push rod 17 and displacement member 7 towards the shown position.

The spring brake piston additionally comprises a release mechanism 21 for mechanically returning the spring brake piston into the shown retention position.

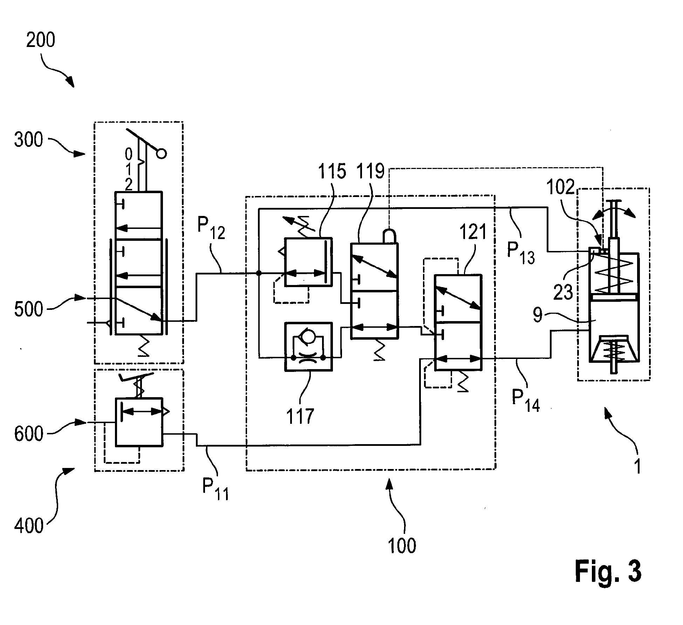

The common pressure chamber 9 is connected through a fluid line 25 to the second fluid port P11 of the braking system, which is in fluid communication with the service brake line, cf. Fig. 3.

The spring brake piston 1 further comprises a spring brake control chamber 23 which is in fluid communication with a first fluid port P12, which is in fluid communication with the parking brake line of the braking system, cf. Fig. 3.

The spring brake actuator according to Fig. 1 comprises a control valve assembly 100 which in the present example is made as an integrated part of the spring brake actuator 100. The control valve assembly 100 comprises a mechanical locking mechanism 101 which is shown in more detail in Fig. 2.

A plunger 102 is movably located inside the control valve assembly 100 for detection of the presence of the spring brake piston 5 in the retention position shown in Fig. 1.

The mechanical locking mechanism 101 of the control valve assembly 100 is shown in more detail in Fig. 2. The mechanical locking mechanism 101 comprises a pneumatic actuator 105 which is adapted to move inside an annular recess 104 in the direction of arrows A depending upon the pressure inside the pressure control chamber 23. The pneumatic actuator 105 engages a plurality of locking elements 103 in the form of projecting members, such as steel balls, and forces them into corresponding recesses 107 formed in the spring brake piston 5. The locking elements 103 extend through corresponding openings of a guiding socket 111.

The pneumatic actuator 105 comprises a conical surface 109 which is adapted to retain the locking elements 103 in the recesses 107 as long as the pressure inside the spring brake control chamber 23 is equal to or above the so-called retention pressure. The retention pressure is understood to be the value of pressure inside the spring brake control chamber necessary to prevent the compression spring 13 from forcing the spring brake piston 5 out of the position shown in Fig. 1, to push the push rod 17.

If the pressure is sufficiently high, the force of the pneumatic actuator 105 in direction of arrows A forces the locking elements 103 in the direction of arrows B.

Fig. 3 shows a braking system 200 in accordance with the invention. The braking system comprises the spring brake actuator 1, the control valve assembly 100, a hand brake lever 300, and a foot brake pedal 400.

The hand brake lever 300 connects a parking brake line 500 to a first fluid port P12 of the control valve assembly. The foot brake pedal 400 connects a service brake line 600 to a second fluid port P11 of the control valve assembly 100.

The control valve assembly 100 comprises a third fluid port P13 in fluid communication with the spring brake control chamber 23 of the spring brake actuator 1, and a fourth fluid port P14 in fluid communication with the common pressure chamber 9 of the spring brake actuator 1.

The control valve assembly shown in Fig. 3 comprises an inversely proportional valve 115 and a check valve 117 with throttled backflow. Both the inversely proportional valve 115 and the check valve 117 are in fluid communication with the first fluid port P12.

Furthermore, the inversely proportional valve 115 and the check valve 117 are connected to a control valve 119 which communicates with the plunger 102 of the spring brake actuator 101 to indicate to the control valve 119 the presence of the spring brake piston 5 in the retention position. Depending on the switching state of the control valve 119, either the inversely proportional valve 115 or the check valve 117 are in fluid communication with the control valve 119.

The control valve 119 is furthermore connected directly to a shuttle valve 121 which in Fig. 3 is shown in the normal state. The shuttle valve 121 is adapted to establish a fluid communication between either the control valve 119, or the second fluid port P11 on one side with the fourth fluid port P14 on the other side, depending on which pressure is higher.

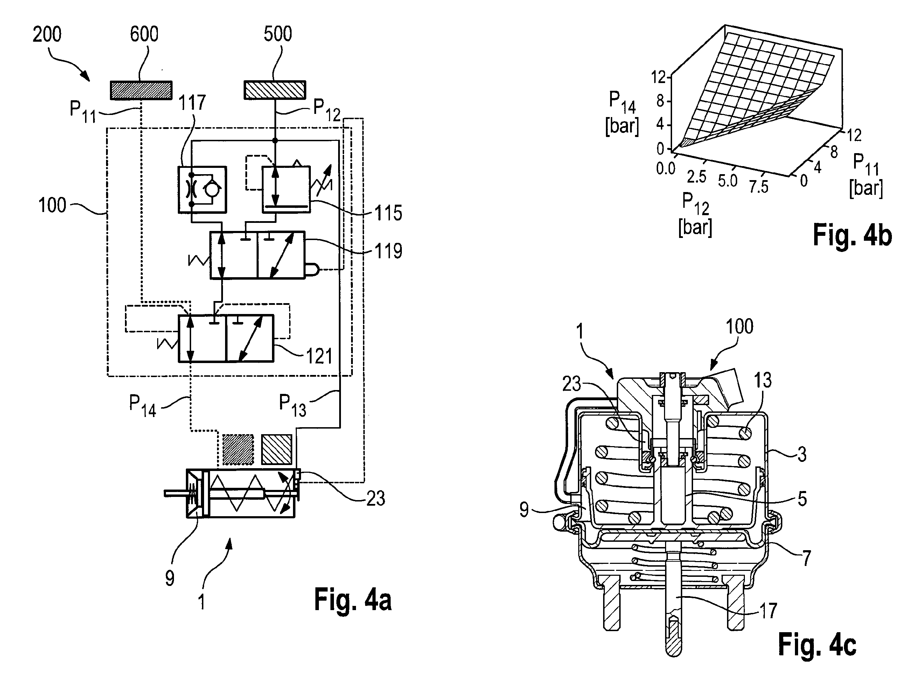

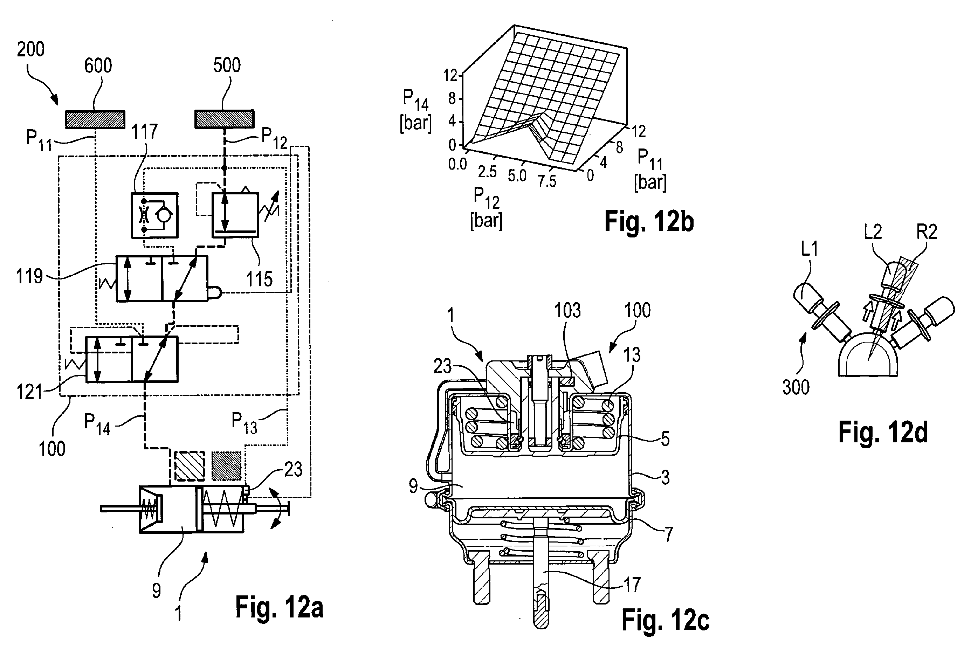

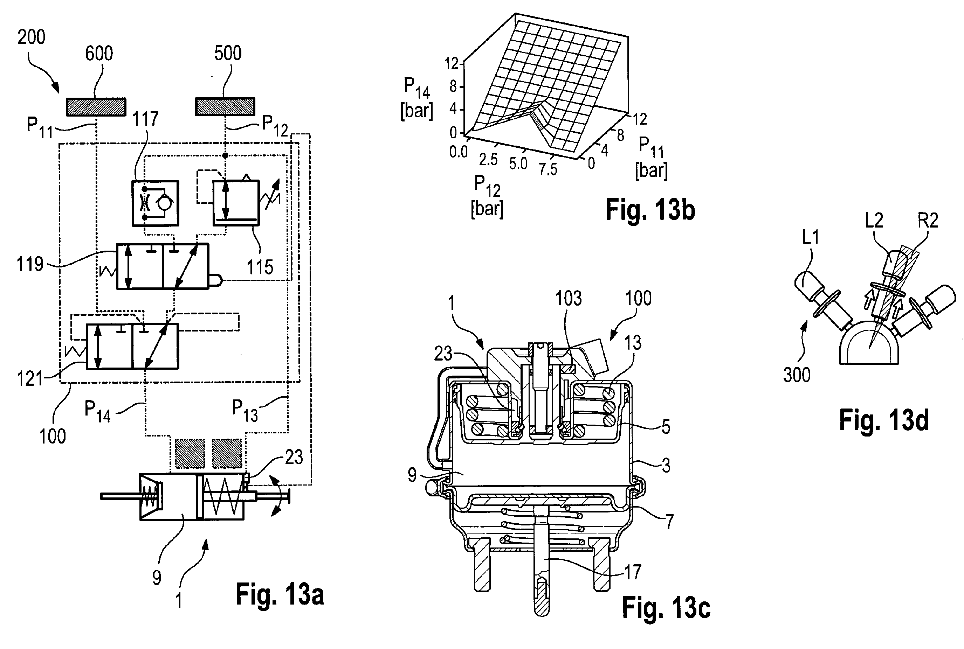

In the following, the functioning principle of the spring brake actuator 1 and the control valve assembly 100 as well as the hand brake lever 300 shall be explained in more detail. Reference will be made to the Figs. 4a - 16c. In this, figures with suffix "a" show and indicate the switching positions of the different valve units of the control valve assembly 100, whereas figures with suffix "b" show the graphical pressure behavior of the control valve assembly and spring brake actuator in the shown state. Figures with suffix "c" indicate the mechanical state of the spring brake actuator in the specific situation.

In Figs. 4a - 4c, the spring brake actuator 1 and control valve assembly 100 are shown in the idle state. Both the parking brake line 500 and service brake line 600 are at zero pressure. The spring brake piston 5 is in the released braking position and has moved both the displacement member 7 as well as the push rod 17 downwards to exert the parking brake function. The shuttle valve 121 establishes a fluid communication between the second fluid port P11 and the fourth fluid port P14.

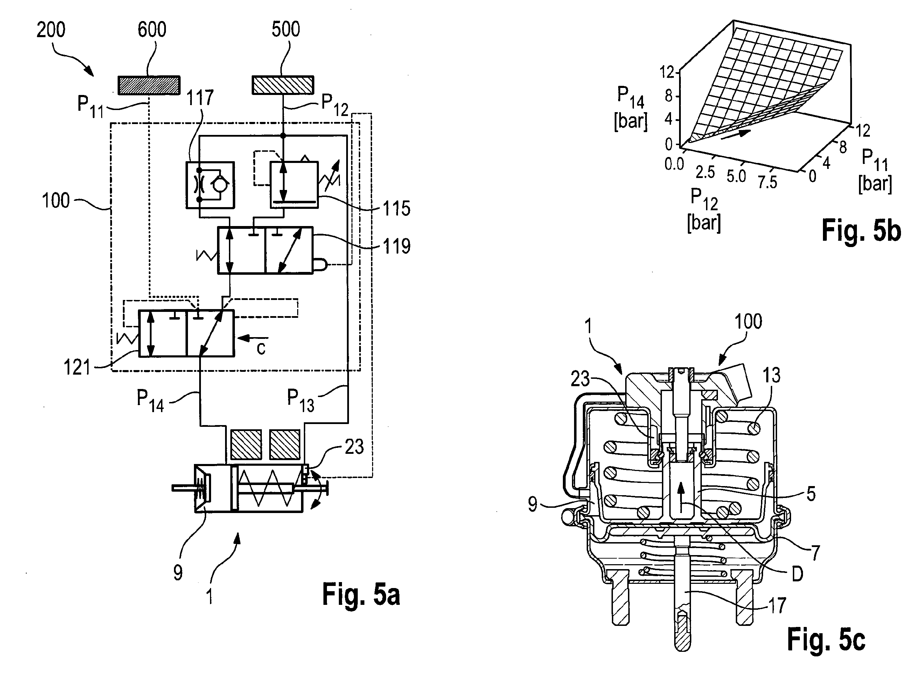

If the braking system, preferably along with the vehicle, is started and the parking brake line 500 is pressurized, the system behavior according to Figs. 5a - 5c occurs. The shuttle valve 121 switches to the higher pressure now coming from the parking brake line through the first fluid port P12, indicated by arrow C. Pressurized air is now allowed to stream though the check valve 117 and control valve 119 to the fourth fluid port P14 and into the common pressure chamber 9. The air pressure at the first fluid port P12 increases, preferably in linear fashion with the pressure at the fourth fluid port P14. As a consequence thereof, the spring brake piston 5 is moved upwards in the direction of arrow D.

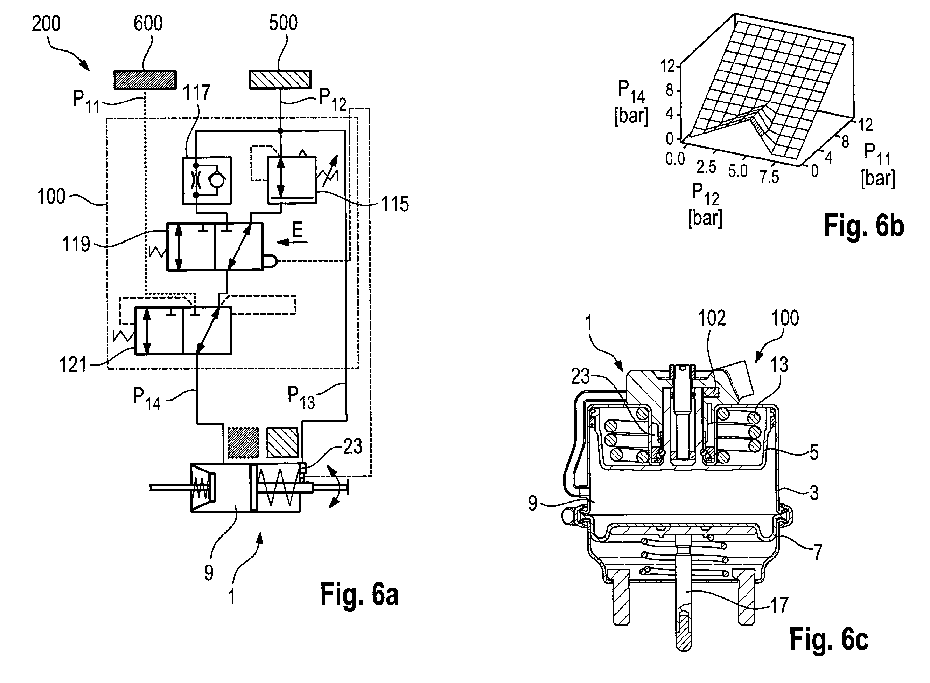

When the pressure at the first fluid port P12 and at the fourth fluid port P14, as well as in the common pressure chamber 9, has reached the retention pressure, the spring brake piston 5 reaches its retention position in the housing 3. The plunger 102 is displaced and switches the control valve 119, thus, a fluid connection between the fourth fluid port P14 and the first fluid port P12 now runs through the inversely proportional valve 115, and the spring brake actuator 1 as well as control valve assembly 100 move from the first operating mode shown in Figs. 4 and 5 into a second operating mode. The switching is indicated by arrow E (Figs. 6a-c).

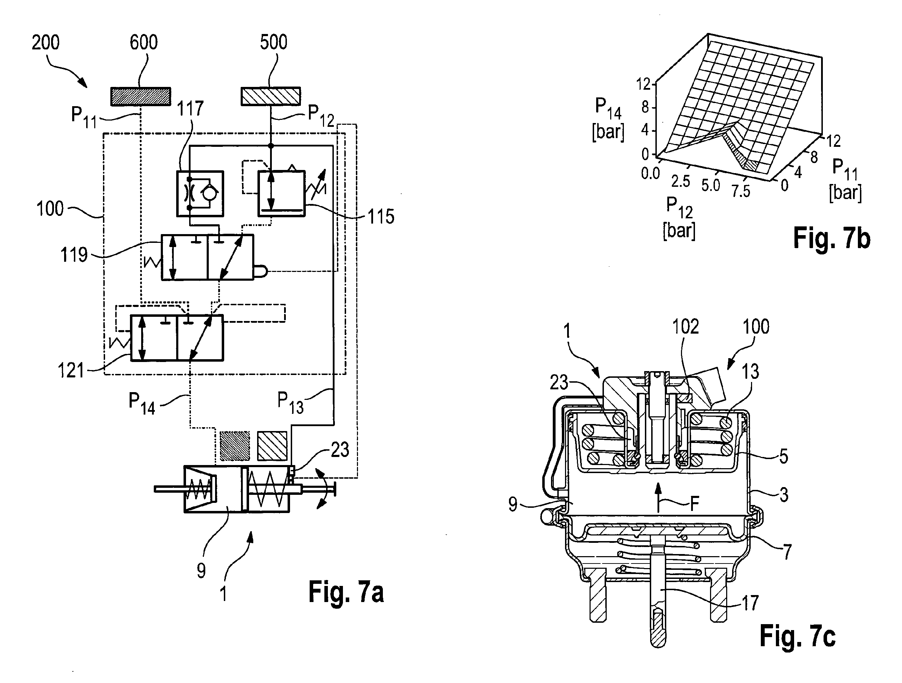

A further increase of pressure at the first fluid port P12 is transduced by the inversely proportional valve 115 into a decreasing pressure at the fourth fluid port and in the common pressure chamber 9. Accordingly, while the pressure in the spring brake control chamber 23 continues to be sufficiently high for retaining the spring brake piston 5 in the retention position, the pressure in the common pressure chamber 9 continues to decrease as shown in Figs. 7a-c. The spring brake piston 5 will not move. However, the displacement member 7 and push rod 17 will be caused to move upwards in the direction of arrow F.

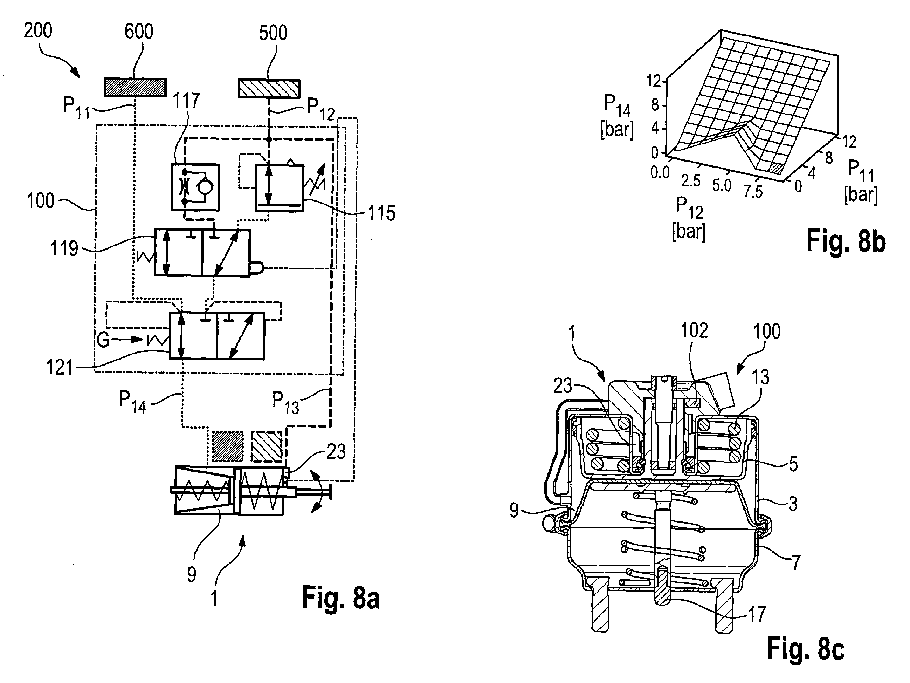

When the common pressure chamber is at zero pressure, the state shown in Figs. 8a - 8c has been reached. Preferably, the pressure at the first fluid port has reached standard operating pressure. The pressure at the shuttle valve coming from the first fluid port is now however no longer greater than the pressure coming from the foot brake pedal and second fluid port P11 due to the inversely proportional valve 115. The shuttle valve 121 switches back into its normal state, as indicated by arrow G.

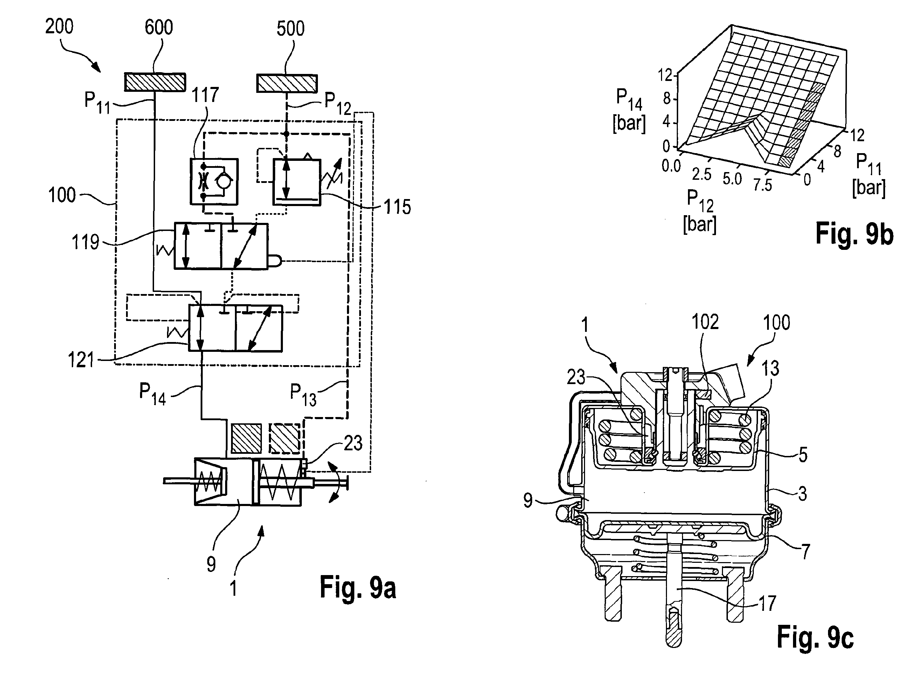

This marks the transition from the second operating mode to a third operating mode, which is also called the driving mode. Now, normal brake operation by foot brake pedal allocates a driver-desired pressure signal directly to the common pressure chamber 9, leading to a movement of the push rod 17 as shown in Figs. 9a - 9c.

The pressure at the fourth fluid port P14 and in the common pressure chamber 9 will now behave according to Fig. 9b, the so-called service brake function. The push rod 17 and displacement member 7 will behave accordingly depending on the volume change in the common pressure chamber 9.

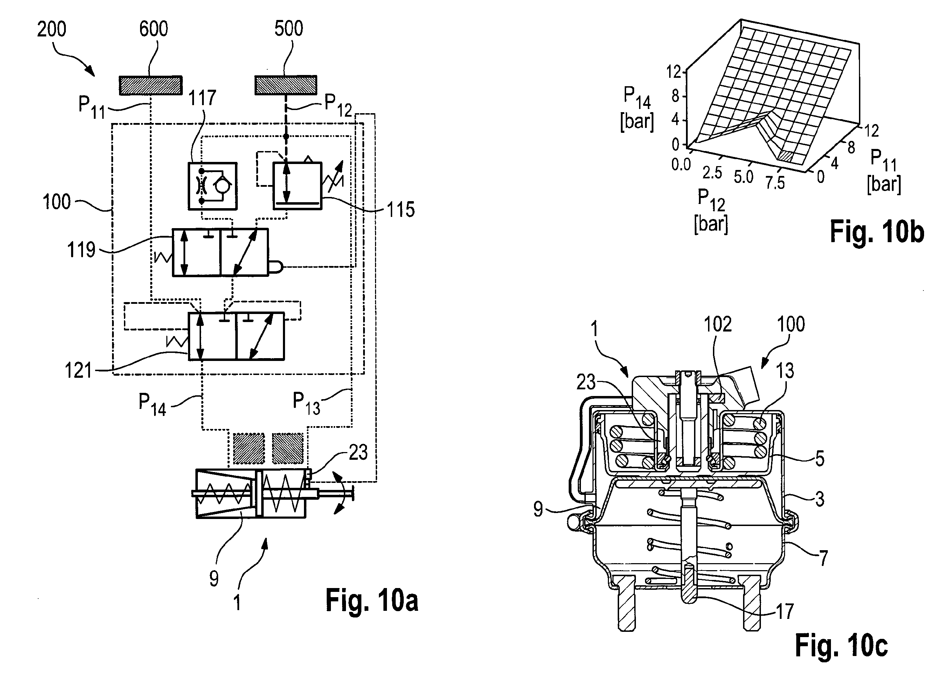

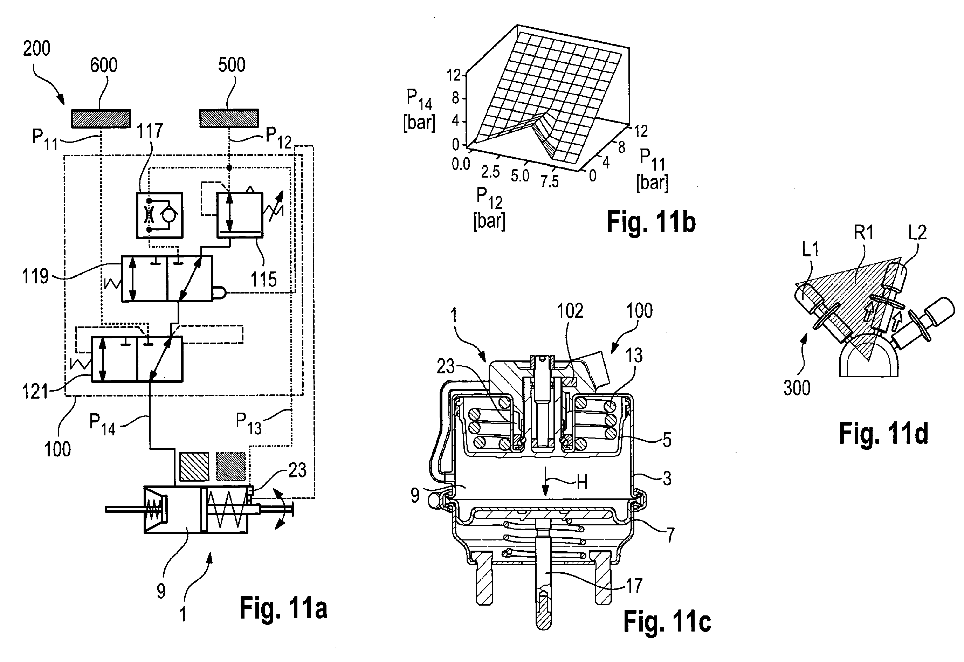

When the pressure at the first fluid port P12 decreases the low standard operating pressure, but still remains above a predetermined setpoint, the third operating mode, or driving mode, is still maintained in order to allow for a certain pressure variation tolerance. This is shown in Figs. 10a - 10c. A feedback signal, which may of the generally known type, causes the opening of the inversely proportional valve 115. From that point onwards, further pressure decrease at the first fluid port P12 is met with a, preferably proportional, pressure increase at the fourth fluid port P14 and in the common pressure chamber 9. The corresponding pressure behavior is shown in Fig. 11 b. This operating mode corresponds to the second operating mode, only in reverse order. The spring brake piston 5 is still maintained in its retention position as shown in Fig. 11c, but the volume in the common pressure chamber 9 increases, leading to a downwards movement of the displacement member 7 and push rod 17 in the direction of arrow H.

Preferably, the pressure decrease at the first fluid port is controlled by the hand brake lever 300 shown in Fig. 11 d. The hand brake lever 300 is moved from a first position L1 gradually towards a second position L2. Between the first and second positions L1 and L2, there is a first range R1. In that first range R1, gradual movement of the hand brake lever from the first position L1 towards the second position L2 causes a gradual decrease of air pressure at the first fluid port P12.

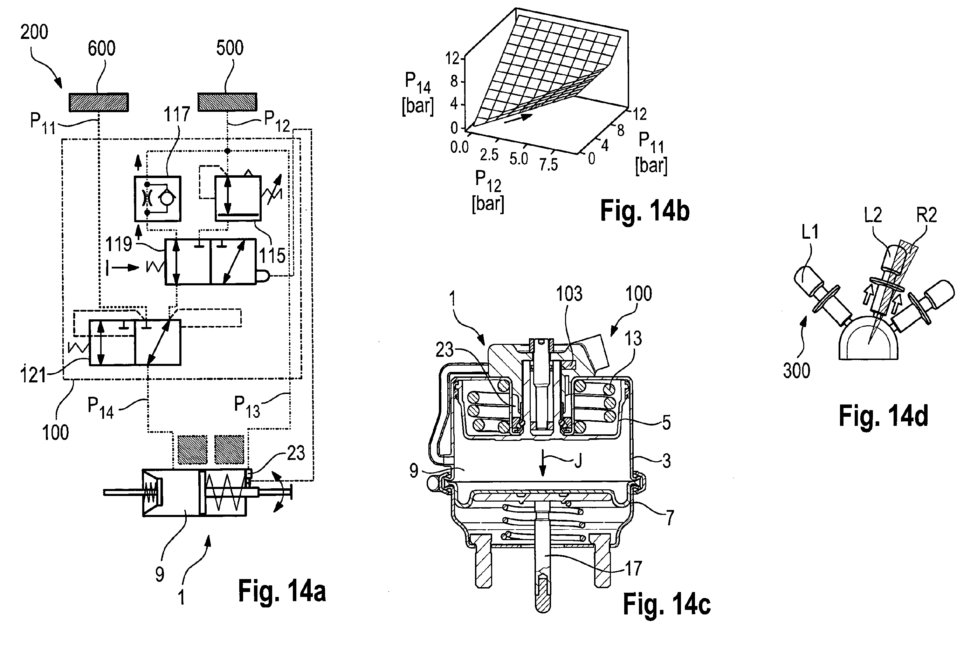

At some point, the pressure in the common pressure chamber 9 reaches or exceeds the retention pressure, and at the same time the pressure in the spring brake control chamber 23 reaches or falls below the retention pressure, the following occurs: The spring brake piston 5 is now technically unlocked because the pressure acting upon the pneumatic actuator 105 is no longer sufficient for retaining the spring brake piston 5. As the pressure in the common pressure chamber 9 is however still large enough, the spring brake piston 5 is temporarily held in place because of the inertial force exercised by the compression spring 13, however, the spring brake piston 5 will start to move downwards. In this state, as indicated in Fig. 14a, after displacement of the plunger 102, the control valve 119 will switch as indicated by arrow I and establish a fluid communication between the throttled backflow of check valve 117 and the fourth fluid port P14. Now, the control valve assembly 100 and spring brake actuator 1 have transitioned from the second operating mode into the first operating mode, however also in reverse direction.

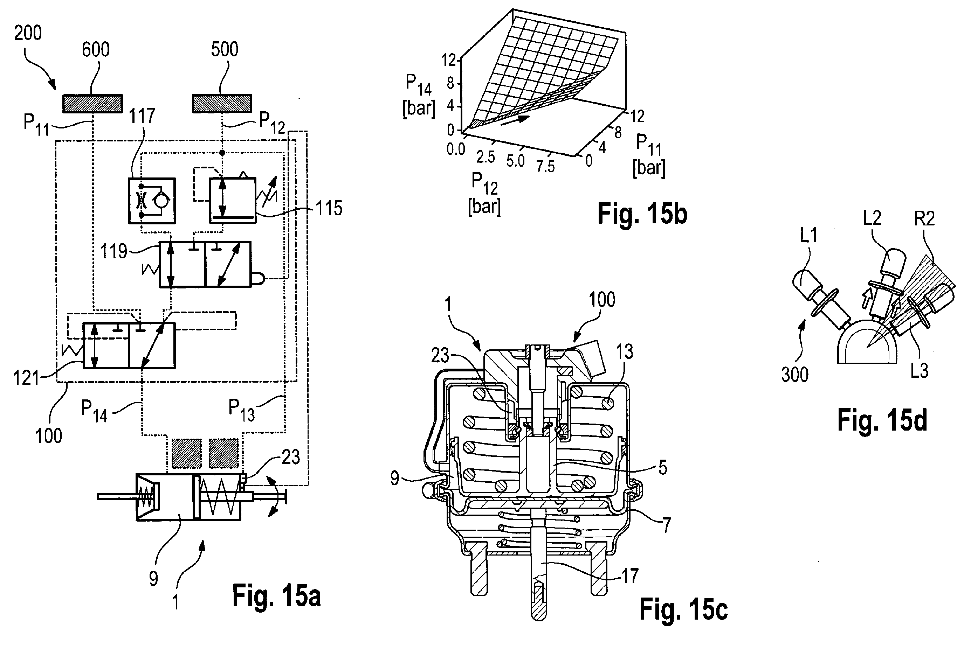

Further pressure decrease at the first fluid port P12 will, facilitated by the force exerted by the compression spring 13, lead to a volume decrease in the common pressure chamber 9 and downward movement of the spring brake piston 5 in the direction of arrow J. The initialization of this downward movement is caused by moving the hand brake lever 300 beyond the second position L2 through a second range R2 towards the third position L3, at which the pressure at the first fluid port P12 is zero, cf. Figs. 15a - 15d. The throttle in the check valve 117 causes a comparatively gentle exhaust of air out of the common pressure chamber 9.

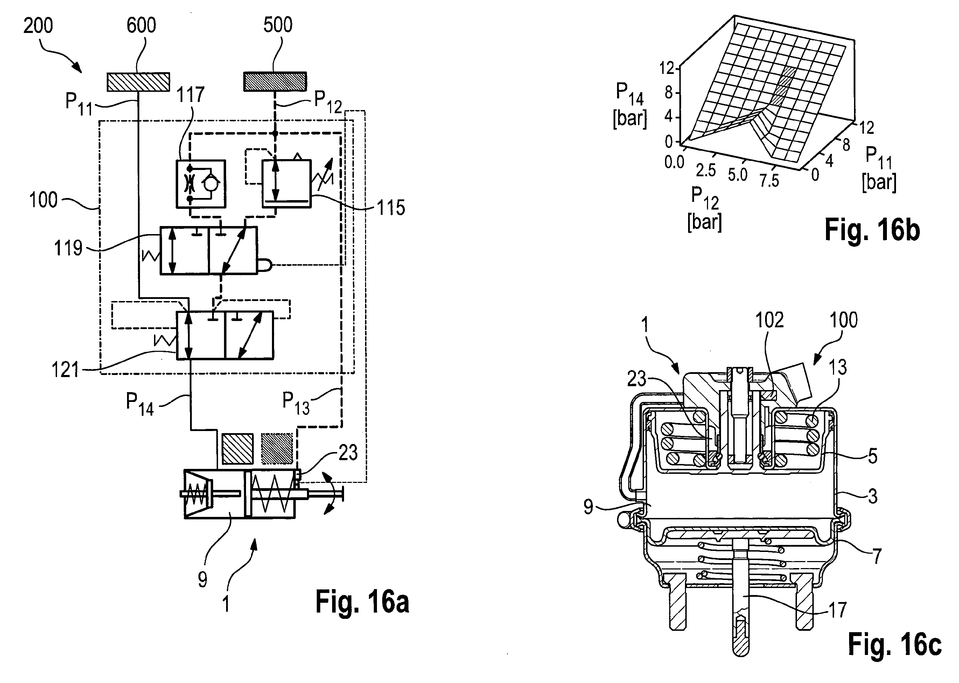

While the aforementioned steps in particular of pressurizing the system at startup have been demonstrated based upon the pressure at the first fluid port P12 only, it should be noted that it is possible for the driver to support the pressurization procedure by applying service brake pressure through the foot brake pedal 400 at the second fluid port P11. If the pressure signal given by the driver through the foot brake pedal 400 is sufficiently high, the shuttle valve 121 prioritizes the second fluid port P11 over the first fluid port P12 and causes pressure increase in the common pressure chamber 9 as a function of the service brake pressure. This is shown in Figs. 16a - 16c. Similarly, the driver can also initiate additional pressure through the service brake line at any other stage of the operation process of the braking system.

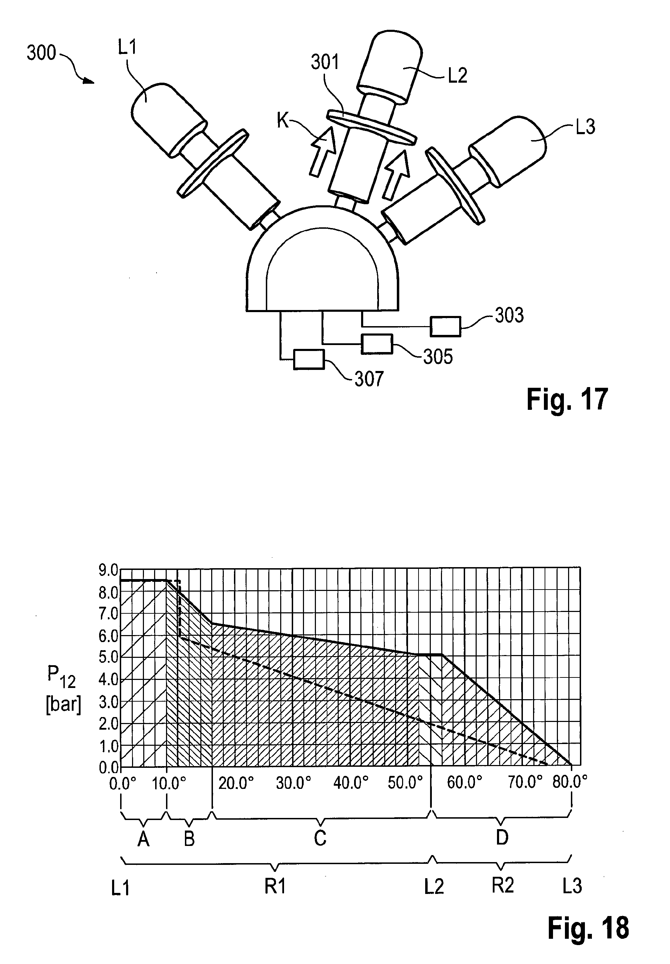

Fig. 17 shows the hand brake lever 300 of Figs. 11d - 15d with its different switching positions and ranges. When attempting to move the hand brake lever 300 from the first range R1 past position L2 into the second range R2, the hand brake lever 300 preferably comprises a manual switch 301 which must be operated, for example in the shown embodiment by pulling the switch 301 upwards, before movement of the hand brake lever may be continued.

The hand brake lever 300 preferably is coupled to a drag mechanism 303 which is adapted to generate a force opposite to the direction of movement of the hand brake lever 300. The drag mechanism 303 preferably is adapted to apply a first drag in the first range R1 and a second drag, different from the first drag, in the second range R2. Preferably, the drag in the second range is higher than in the first range, making it more difficult for the driver to inadvertently move the lever past the second position L2, for example in case of a malfunction of the manual switch 301.

The hand brake lever 300 further comprises an alarm device for generating an alarm signal, preferably a light signal, an alarm sound, a vibration alarm, or combinations thereof. The hand brake lever 300 optionally also comprises an automatic switch 307 adapted to release movement of lever 300 from the second rage R2 to the first range R1 only when the vehicle is at standstill or below a predetermined speed.

Fig. 18 shows a graphical representation of the pressure characteristics of the hand brake lever 300. Zone A represents a dead stroke in which the pressure does not change and remains at the standard operating pressure.

After a couple of degrees of movement of the hand brake lever, the pressure is initially decreased down to a level which still guarantees ordinary operation. Below this guarantee pressure, which corresponds to the predetermined setpoint mentioned herein above, the pneumatic brake function is applied as the lever moves on through range 1.

Zone C exemplifies a comparatively gentle decrease of air pressure to provide for precise and smooth pneumatic brake force transmission. The switching point between zone C and zone D can be adjusted to meet the specific need of the spring brake actuator 1 which the hand brake lever 300 is to cooperate with. Depending on the compression spring 13, the pressure for switching between zone C and zone D must be adapted to exactly meet the retention pressure of the spring brake piston 5. In zone D, which coincides with range R2 of the hand brake lever 300, the pressure decrease may be steep, as the vehicle will in all likelihood already be standing when the mechanical parking brake is applied.

Hereinafter, the basic function of a commercially available inversely proportional valve 700 will be described with reference to figures 19a,b. For the following description, it shall be assumed that the valve 700 is used as a trailer brake valve and mounted functionally to a tractor and trailer assembly. The operation of the trailer brake valve is described as follows:
Compressed air passes from port 701 through a trailer reservoir port 701-2.

Upon actuation of e.g. tractor brakes, compressed air flows via a port 704 to the upper side of a piston (a). The piston (a) is forced down and by seating on a valve (f) closes an outlet (b) and opens an inlet (g). Compressed air from the trailer reservoir port 701-2 now flows via ports 702 into chamber C via passage A and pressure builds up against valve (k).

As soon as the pressure in chamber (C) predominates, valve (k) opens against the force of pressure spring (i). The air flows into chamber (D) via passage (B), acting on the underside of piston (a). As a result of the compounding of forces in chambers (D) and (E), the pilot pressure acting on the upper side of piston (a) is overcome and piston (a) is forced up.

In the case of partial brake application, valve (f) closes inlet (g) and a neutral position is reached. In the case of full brake application, inlet (g) is kept open by piston (a) over the entire braking process.

A maximum predominance of 1 bar can be established between ports 2 and 4 by means of adjusting the tension of pressure spring (i) using set screw (h).

When port 704 is vented, the pressure in ports 702 forces piston (a) upward to the top of its stroke. Inlet (g) is closed and outlet (b) is opened. The compressed air at ports 702 is exhausted through valve (f) and vent 703. Due to the drop in pressure in chamber (C), the compressed air in chamber (D) flows via bores (j) of valve (k) into chamber (C) and on to vent 703.

When the trailer is uncoupled or in the event of a rupture in the supply line, port 701 is exhausted and the pressure acting on the upper side of piston (d) is reduced. The load in pressure spring (e) and the supply pressure at port 701-2 forces up piston (d) and valve (f) closes outlet (b). As piston (d) continues to move up, it moves away from valve (f) and inlet (g) opens. The supply pressure at port 701-2 flows to ports 702, e. g. at a 1:1 ratio.

When using the relay emergency valve in combination with load sensing valves or manually adjustable load-apportioning valves that have no release position, a commercially available trailer brake valve from the series 963 001 ... 0 allows the trailer to be moved even when it is not attached to a motor vehicle. For this purpose, piston (I) is pushed in to the stop by hand via actuation button (m). This closes the passage from port 711 of the trailer brake valve to port 701 of the relay emergency valve and a connection between port 701 of the relay emergency valve and port 712 of the trailer release valve is established. Pressure from the trailer reservoir at port 712 flows through port 701 of the relay emergency valve, causing it to reverse into the driving position and the brake actuators are exhausted.

If, when the trailer is once again attached to a motor vehicle, the piston (I) has not been fully pulled out manually, the supply pressure from the motor vehicle entering via port 711 will push it out. The release valve is then once more in its normal position where a connection is established between port 711 of the release valve and port 701 of the relay emergency valve.

In cases such as with the present invention, it shall be observed that when the valve assembly does not comprise a dedicated high pressure source, only a part of the pressure range will be operated with the inversely proportional function.

### List of reference signs (part of the description)

- 1: Spring brake actuator
- 3: Housing
- 5: Spring brake piston
- 7: Displacement member
- 9: Pressure chamber
- 11: Sealing means
- 13: Compression spring
- 15: Head plate
- 17: push rod
- 19: Return spring
- 21: Release mechanism
- 23: Control chamber
- 25: Fluid line
- 100: Control valve assembly
- 101: Locking mechanism
- 102: Plunger
- 103: Locking element
- 104: Annular recess
- 105: Pneumatic actuator
- 107: Recess
- 109: Conical surface
- 111: Guiding socket
- 115: Inversely proportional valve
- 117: Check valve
- 119: Control valve
- 121: Shuttle valve
- 200: Braking system
- 300: Hand brake lever
- 301: Manual switch
- 303: Drag mechanism
- 305: Alarm device
- 307: Automatic switch
- 400: Foot brake pedal
- 500: Parking brake line
- 600: Service brake line
- 700: Inversely proportional valve
- 701: Port
- 702: Port
- 701-2: Port
- 703: Vent
- 704: Port
- 711: Port
- 712: Port
- P11: Second fluid port
- P12: First fluid port
- P13: Third fluid port
- P14: Fourth fluid port
- L1: First position
- L2: Second position
- L3: Third position
- R1: First range
- R2: Second range
- A: piston
- B: passage
- C: chamber
- D: chamber
- b: outlet
- d: piston
- e: pressure spring
- f: valve
- g: inlet
- h: set screw
- i: pressure spring
- k: valve
- I: piston
- m: actuation bottom

## Claims

1. A spring brake actuator (1), in particular parking or emergency spring brake actuator (1), for use in a commercial vehicle, said actuator comprising:
- a housing (3),
- a push rod (17)for actuating a brake mechanism,
- a spring brake piston (5) for actuating the push rod (17), and
- a displacement member (7), preferably a diaphragm or piston, for actuating the push rod (17), **characterized in that** the housing (3), the spring brake piston (5)and the displacement member (7) define one common pressure chamber (9).

2. The spring brake actuator (1) of claim 1,
comprising a mechanical locking mechanism (109) for engaging and releasing the spring brake piston (5) such that a movement of the spring brake piston (5) towards the push rod (17) is prevented.

3. The spring brake actuator (1) of claim 2,
wherein the mechanical locking mechanism (101) comprises at least one locking element (103) for engaging the spring brake piston (5), preferably by way of a frictional connection, a positive locking, or a combination thereof.

4. The spring brake actuator (1) of claim 2 or 3,
wherein the mechanical locking mechanism (101) comprises a spring brake control chamber (23), and a pneumatic actuator (105) adapted to engage one locking element (103) as a function of the pressure inside the spring brake control chamber (23).

5. The spring brake actuator (1) of claim 4,
said pneumatic actuator (105) being adapted to
- retain the at least one locking element (103) in its locking engagement when the actuating pressure is at or above a retention pressure, and
- release the at least one locking element (103) from its locking engagement when the actuating pressure is below the retention pressure.

6. The spring brake actuator (1) of any one of the preceding claims,
comprising a control valve assembly (100) having a first fluid port (P12) for connection to a parking brake line (500), a second fluid port (P11) for connection to a service brake line (600), a third fluid port (P13) in fluid communication with the spring brake control chamber (23), and a fourth fluid port (P14) in fluid communication the common pressure chamber (9).

7. The spring brake (1) actuator of claim 6,
wherein the control valve assembly (100) is configured such that the first fluid port (P12) and the third fluid port (P13) are always at equal pressure.

8. The spring brake actuator (1) of claim 6 or 7,
said control valve assembly (100) is adapted to selectively:
- connect either the second fluid port (P11), or the first fluid port (P12) to the fourth fluid port (P14), whichever pressure is higher, and
- connect the first fluid port (P12) to the third fluid port (P13).

9. The spring brake actuator (1) of claim 8,
wherein the control valve assembly (100) is adapted to control the pressure at the fourth fluid port (P14) inversely dependant on, preferably inversely proportional to, the pressure at first fluid port (P12).

10. The spring brake actuator (1) of any one of claims 6 to 9,
wherein the control valve assembly (100) comprises a first operating mode, in which mode the control valve assembly (100) is switched so that:
the fourth fluid port (P14) and either the first fluid port (P12) or the second fluid port (P11) are in fluid communication with each other, whichever is higher.

11. The spring brake actuator (1) of claim 9 or 10,
wherein the control valve assembly (100) comprises a second operating mode, in which mode the control valve assembly is switched so that:
- either the first fluid port (P12) or the second fluid port (P11), whichever pressure is higher, are in fluid communication with the fourth fluid port (P14), wherein air pressure at the fourth fluid port (P14) is inversely dependant, preferably inversely proportional, to the air pressure at the first fluid port (P12).

12. The spring brake actuator (1) of any one of claims 6 to 11,
wherein the control valve assembly (100) comprises a third operating mode, in which mode the control valve assembly is switched so that:
- the second fluid port (P11) and the fourth fluid port (P14) are in fluid communication and at equal pressure.

13. The spring brake actuator (1) of claim 12,
wherein the control valve assembly (100) is adapted to remain in the third operating mode as long as the pressure at the third fluid port (P13) is at or above a predetermined setpoint, said setpoint being lower than the standard operating pressure, but higher than the retention pressure.

14. The spring brake actuator (1) of any one of claims 6 to 13,
wherein the control valve assembly (100) comprises at least one throttle in fluid communication with the first fluid port (P12), and
- a fourth operating mode, in which mode the valve assembly (100) is switched so that:
- the fourth fluid port (P14) is in fluid connection with the throttle.

15. The spring brake actuator (1) of any one of claims 10 to 14,
wherein the control valve assembly (100) comprises an inversely proportional valve (115) connected with the first fluid port (P12).

16. The spring brake actuator (1) of any one of claims 10 to 15,
wherein the control valve assembly (100) comprises a check valve (117) with throttled backflow, said check valve (117) with throttled backflow being in fluid communication with the first fluid port (P12).

17. The spring brake actuator (1) of claim 16,
wherein the control valve assembly (1) comprises a control valve (119), said control valve (119) being switchable to be in fluid communication either with the inversely proportional valve (115) or the check valve (117) with throttled backflow.

18. The spring brake actuator (1) from claim 17,
said control valve (119) being actuated by a plunger (102) which is actuated by the spring brake piston (5), said plunger (102) being configured to be displaced and switch the control valve (119) when the spring brake piston (5) moves away from its retention position towards the push rod.

19. The spring brake actuator (1) of claim 17 or 18,
wherein the control valve assembly (100) comprises a shuttle valve (121) which is adapted to establish a fluid communication between either the second fluid port (P11) or the control valve (119), whichever pressure is higher, and the fourth fluid port (P14).

20. A control valve assembly (100) for controlling a spring brake actuator (1) of any one of claims 1 to 19, having a first fluid port (P12) for connection to a parking brake line (500), a second fluid port (P11) for connection to a service brake line (600), a third fluid port (P13) for connection to a spring brake control chamber (23) of the spring brake actuator (1), and a fourth fluid port (P14) for connection to a common pressure chamber (9) of the spring brake actuator (1).

21. A hand brake lever (300) for controlling air pressure in a spring brake actuator (1), in particular the spring brake actuator (1) of any one of claims 1 to 19,
wherein the hand brake lever (300) is adapted to be connected to the parking brake line (500) for controlling the pressure in said parking brake line,
**characterized in that** the hand brake lever (300) is movable between a first, a second and a third position (L1, L2, L3), the hand brake lever (300) being configured to allocate to the parking brake line:
- zero pressure in the third position (L3),
- the retention pressure in the second position (L2), and
- the standard operating pressure, which is above the retention pressure, in the first position (L1).

22. The hand brake lever of claim 21,
wherein the hand brake lever is movable gradually in a first range (R1) extending between the first and second position (L1, L2), and gradually in a second range (R2) extending between the second and third position (L2, L3), respectively for gradually allocating pressure to the parking brake line (500).

23. The hand brake lever of claim 22,
wherein the hand brake lever (300) comprises a manual switch (301) for selectively enabling or preventing the lever (300) to be moved from the first range (R1) to the second range(R2) and preferably vice versa.

24. The hand brake lever of claim 22 or 23,
wherein the hand brake lever (300) is coupled to a drag mechanism (303), the drag mechanism (303) being adapted to generate a force opposite to the direction of movement of the hand brake lever (300), said drag mechanism being adapted to apply a first drag in the first range, and a second drag different from the first drag in the second range.

25. The hand brake lever (300) of claim 24,
wherein the drag mechanism (303) comprises at least one of:
- a mechanical element, preferably a spring or rubber element,
- a geometrical element, preferably a pawl, groove, curve, step,
- a pair of frictionally engaging objects,
- an object acting against a viscose fluid,
- a magnetic or electromagnetic field,
- a pneumatic or hydraulic damper, or
- combinations thereof.

26. The hand brake lever (300) of any one of claims 21 to 25,
comprising an alarm device (305) for generating an alarm signal when the hand brake lever (300) is moved to or past the second position (L2), in particular when leaving the second position (L2) towards the first range (R1), said alarm device (305) comprising at least one of: a light emitter, a sound generator, and a vibration generator.

27. The hand brake lever (300) of any one of claims 21 to 26,
comprising an automatic switch (307) adapted to release movement of the hand brake lever from one range to the other range only below a predetermined vehicle speed, and to block movement of the hand brake lever from one range to the other range at or above the predetermined speed.

28. A braking system (200) for a commercial vehicle, comprising:
- a spring brake actuator (1), in particular according to any one of claims 1 to 20,
- a parking brake line (300) and a service brake line (600) connected to the spring brake actuator (1),
- a foot brake pedal (400) in fluid communication with the service brake line (600) for controlling the pressure in said service brake line (600), and
- a hand brake lever (300) in fluid communication with the parking brake line (500) for controlling the pressure in said parking brake line.

29. The braking system of claim 28,
wherein the hand brake lever is a first hand brake lever, and the braking system further comprises a second hand brake lever,
wherein said first hand brake lever is gradually movable between a first position and a second position and adapted to gradually allocate a pressure from a first pressure range to the parking brake line, said first pressure range preferably extending from the standard operating pressure to the retention pressure; and
wherein the second hand brake lever is gradually movable between a first position and a second position and adapted to gradually allocate a pressure from a second pressure range to the parking brake line, the second pressure range preferably extending from the retention pressure to zero pressure.

30. The braking system of claim 29,
wherein the first and second hand brake lever are coupled such that
- movement of the first lever is only enabled if the second hand brake lever is in its first position, and
- movement of the second hand brake lever is only enabled if the first hand brake lever is in its second position.

31. The braking system of claim 28,
the hand brake lever is the hand brake lever (300) according to any one of claims 22 to 28.

32. A method for controlling a spring brake actuator, in particular a spring brake actuator of one of claims 1 to 19 or a control valve assembly according to claim 20, the method comprising the steps of:
- providing pressurized air to one common pressure chamber which is defined by a housing, a spring brake piston, and a displacement member of the spring brake actuator, and
- selectively moving the spring brake piston, the displacement member or both to transmit a braking force to a push rod with the pressurized air in the common pressure chamber.

33. The method of claim 32, comprising the step of:
- selectively engaging or releasing the spring brake piston with a mechanical locking mechanism.

34. The method of claim 33, comprising the step of:
- providing pressurized air to a pneumatic actuator of the mechanical locking mechanism, and thereby
- retaining the spring brake piston when the actuating pressure is at or above its retention pressure, or
- releasing the spring brake piston when the actuating pressure is below the retention pressure.

35. The method of any one of claims 32 to 34,
wherein the pressurized air acting on the pneumatic actuator is always held at the same pressure than in a parking brake line of a braking system, in particular a braking system according to one of claims 28 to 31, and
wherein the pressurized air in the common pressure chamber is a function of the pressure in the parking brake line, in a service brake line of the braking system, and of the retained or released state of the spring brake piston, and preferably regulated by a control valve assembly of claim 20.

36. The method of claim 35,
comprising a first operating mode, in which mode:
- air pressure in the common pressure chamber is increased from zero pressure to the retention pressure,
- air pressure acting on the pneumatic actuator, preferably in a spring brake control pressure chamber, is increased from zero pressure to the retention pressure, and
- the spring brake piston is retained by the mechanical locking mechanism once the retention pressure is reached.

37. The method of claim 36,
comprising a second operating mode, in which mode:
- air pressure acting on the pneumatic actuator is increased from the retention pressure to a standard operating pressure, and
- air pressure in the common pressure chamber is decreased from the retention pressure to zero pressure, preferably inversely proportional to the pressure increase acting on the pneumatic actuator.

38. The method of claim 37,
comprising a third operating mode, in which mode:
- air pressure in the common pressure chamber is equal to the, preferably variable, pressure in the service brake line, and
- air pressure acting on the pneumatic actuator is equal to the pressure in the parking brake line, and preferably held at the standard operating pressure.

39. The method of claim 38,
comprising the steps of:
- decreasing the air pressure acting on the pneumatic actuator, preferably by using a hand brake lever, preferably the hand brake lever of any one of claims 22 to 28, and
- when the air pressure acting on the pneumatic actuator has decreased to or below a predetermined value below the standard operating pressure, but still above the retention pressure: inversely proceeding in the second operating mode, such that
- air pressure acting on the pneumatic actuator is decreased towards the retention pressure, and
- air pressure in the common pressure chamber is increased towards the retention pressure, preferably inversely proportional to the pressure decrease acting on the pneumatic actuator.

40. The method of claim 39,
comprising the steps of:
- when the pressure acting on the pneumatic actuator has been decreased to reach the retention pressure, and the pressure in the common chamber has been increased to or above the retention pressure:
inversely proceeding in the first operating mode, in which mode:
- the spring brake piston is released,
- air pressure in the common pressure chamber is decreased towards zero pressure for moving the released spring brake piston, and
- air pressure acting on the pneumatic actuator, preferably in a spring brake control pressure chamber, is decreased towards zero pressure.
